Europäisches Patentamt

European Patent Office

Office européen des brevets

(11) Publication number : **0 478 487 A2**

# (12) EUROPEAN PATENT APPLICATION

(21) Application number : **91480132.9**

(22) Date of filing : **29.08.91**

(51) Int. Cl.⁵ : **G06F 13/37**

(30) Priority : **28.09.90 US 589718**

(43) Date of publication of application :
**01.04.92 Bulletin 92/14**

(84) Designated Contracting States :
**DE FR GB**

(71) Applicant : **International Business Machines Corporation**
**Old Orchard Road**
**Armonk, N.Y. 10504 (US)**

(72) Inventor : **Boldt, Gerald Donald**
**12900 Linda Vista Drive**
**Longmont, Colorado 80501 (US)**
Inventor : **Hanna, Stephen Dale**
**6655 N. Canyon Crest Drive, Apt. 17101**
**Tucson, Arizona 85715 (US)**
Inventor : **Vogelsberg, Robert Eric**
**1345A Bear Mountain Drive**
**Boulder, Colorado 80303 (US)**

(74) Representative : **Bonin, Jean-Jacques**
**Compagnie IBM France Département de**
**Propriété Intellectuelle**
**F-06610 La Gaude (FR)**

(54) Arbitration system for requests for access to a plurality of resources.

(57)   Daisy chain of resource masters responds to locally synchronized resource grant signal and inhibits passing the resource grant signal further down the daisy chain immediately upon cessation of the resource grant signal.

FIG. 2

## Background and Summary of the Invention

This invention relates to arbitrations of requests for access to system resources and particularly to bus arbitration, especially daisy chain arbitration, a process for resolving the assignment of one of a plurality of simultaneous requestors for a system resource, usually a system bus.

Electronic computer systems usually require that the processor have access to input and output devices for useful functioning. For most efficient operation, such devices operate independently from the central processor. That is, unlike early computer systems where the devices were controlled by the central processing unit, modern design moves the processing function into the device, permitting the central processor and the devices to function simultaneously and independently. At times, however, the devices must access resources shared with other devices and with the central processor. For example, the main memory is often a shared resource and is accessed via a system bus. The central processor operates on data stored in the memory and some devices are used to store data from outside the system into the memory for processing while other devices read data from the memory for use outside the system, e.g., printing the results of computation and processing.

To reduce interference with the workings of the central processor, a technique known as Direct Memory Access (DMA) is used to enable devices to read from or write to the memory without requiring the central processor's intervention. The address of the data location in memory is stored in the device and used to address the memory during one or more cycles while the central processor and other devices are inhibited from accessing the memory. The DMA process operates as an interrupt procedure, so called because it doesn't always require access to the memory on a regular, periodic basis and interrupts the central system for access asynchronously. Such processes are also called cycle stealing.

All the devices, including the central processor, cannot access the memory bus simultaneously because there would be no way to distinguish the separate signals. Therefore, resource requests must be arbitrated in a way that fulfills the requirements of all the devices.

In a daisy chain arbitration scheme, all the devices, e.g., bus masters, associated with the bus are coupled serially to a resource (bus) grant signal and in parallel to a resource (bus) request signal. When a bus master requires access to the bus, it activates the bus request signal and then waits for a bus grant signal. The bus grant signal is passed down the serial chain of bus masters until it reaches a bus master which has requested access to the bus. Each bus master in the chain samples the bus grant signal it receives and either takes control of the bus or generates an output bus grant signal, i.e., a passed bus grant signal, to the next bus master in the chain.

Prior art daisy chain designs sample the bus grant signal and synchronize it to a local clock at the both the leading and the trailing edges. Synchronization at both edges was considered necessary because each device may have its own local clock for internal use. This is the safe approach but degrades performance.

The bus grant signal timings in a daisy chain can vary a great deal depending on the number and type of bus masters and the position of each bus master in the chain. The first bus master in the chain will typically experience very fast bus grant responses whereas the last bus master in the chain may have to wait a significant amount of time for a response. During the propagation of a change in the bus grant signal down the daisy chain from one bus master to the next, several conditions can arise that would result in incorrect operation by a bus master.

For example, a fast bus master could cause the time between the deactivation of the bus grant signal for one cycle and the activation of the bus grant signal for the another cycle to be quite short if each bus master does not synchronize the bus grant signal on both the leading and the trailing edges. A shortened inactive signal condition could be reduced by the sampling delays of successive bus masters in the chain until the signal (condition) is lost.

Another hazard exists for the bus masters located at the end of the chain. These devices may experience a considerable length of time for the deactivation of the bus grant signal to propagate down the chain to them. If a bus master internal cycle is shorter than the propagation delay, the bus grant signal from the previous cycle may be incorrectly sampled as a new bus grant signal for the present cycle.

As a result of such problems, previous daisy chain arbitration schemes were designed for a specific set, order, and type of bus masters. The requirement to design the daisy chain for specific timing conditions severely limits the universality of the system. The number and type as well as the order of bus masters is limited to avoid potential timing hazards.

U.S. Patent 4,660,169 discloses an asynchronous daisy chain arrangement that enables a bus master to seize control of the bus when a Bus Acknowledge (Grant) signal is received without incurring any synchronization delay. The bus master inhibits setting synchronization latches to prevent passing the bus grant signal to the next bus master in the chain by delaying the setting of the latches for a short time period before a Local Bus Request Required signal is issued to insure the stability of the bus grant signal passed when the bus master determines its need for the bus. If the bus master requires control of the bus, it continues to delay the synchronization latch setting long enough to complete its seizing control of the bus and to signal the bus arbiter that it has taken control. The invention in this application eliminates the delays in setting the latches as well as eliminates-the timing problem that occurs when a limiting number of bus masters is exceeded.

The present design makes it unnecessary to synchronize the trailing edge of the bus grant signal to the local clock. The trailing edge controls logic circuits external to the bus masters' internal synchronous state machines. This design avoids the potential timing hazards while eliminating the timing restrictions imposed by the need for synchronization of the trailing edge with the local clock.

In accordance with the invention, a daisy chain of resource masters is made up of resource masters having the capability of supplying a resource request signal, receiving a resource grant signal, and controlling a resource if a resource request signal was supplied from the resource master. The resource grant signal is passed to the next master in the chain if no resource request signal was supplied from the resource master, but the passing is inhibited in immediate response to inactivation of the resource grant signal. This prevents timing anomalies in the following resource masters in the following chain whereby a resource master may respond incorrectly to a resource grant signal that is still actively propagated from a previous cycle.

Brief Description of the Drawing

The invention is described in detail by referring to the various figures which illustrate specific embodiments of the invention, and wherein like numerals refer to like elements.

Figure 1 is a block diagram of a daisy chain resource acquisition system.

Figure 2 is a state diagram of a bus request operation according to the invention.

Figure 3 is a timing diagram of the relationship among signals used in the arbitration of bus requests.

Figure 4 is a logic diagram of the pass logic of the arbitration system.

Description of the Preferred Embodiment

In the following description, the illustrated embodiment is described in terms of gaining access to a system bus by one of several bus masters. It is not intended that the invention be limited to bus master operations. It is equally applicable to the access to any common system resource. That is, the invention applies to resource masters in general where requests are made for access to the resource and a resource grant signal is returned to indicate that access may be had to the resource.

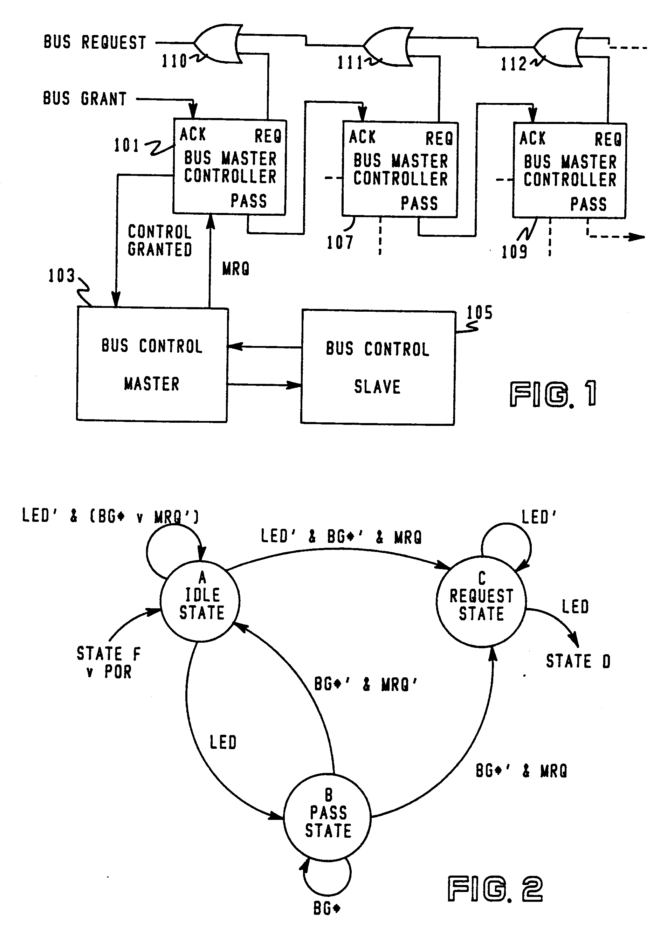

In Figure 1, a bus master is shown composed of a bus master controller 101, a bus control master 103, and a bus control slave 105. Two other bus master controllers 107 and 109 are shown without the associated bus control masters and bus control slaves. Each bus master controller, bus control master, and bus control slave has its own internal local clock and internal state machine except that each pair of bus master controller and bus control master can share the same clock. As described herein, the bus master controller is treated as separate from its associated bus control master but they can also be combined into one unit, sharing the same internal state machine and internal local clock.

A bus request signal is generated by ORing the REQ signals from each of the bus master controllers by serial OR gates 110-112 in the illustrated embodiment. Serial coupling of the OR function facilitates the addition of more bus masters in the system without the need to change the existing circuits.

A bus grant signal is coupled to the ACK input terminal of the first bus master controller in the chain. Thereafter, the PASS output terminal of each bus master controller is coupled to the ACK input terminals of its next bus master controller.

When a device needs access to the bus, its bus control master supplies a request signal, MRQ, to its bus master controller. When the bus master controller 101 has taken control of the bus, it sends an appropriate CONTROL GRANTED signal to its associated bus control master. The operation of the bus control master 103 and the bus control slave 105 are not part of the invention and need not be described in detail for an understanding of the invention. (See the cross-related patent application for a description of such devices.)

Included in the bus master controllers are state machines such as described by Figure 2. The state diagram of Figure 2 completely describes the portion of the state machine of interest in the bus master controllers. Given such a diagram, a person of ordinary skill can construct a logic circuit to perform the given functions.

The signal names will now be defined.

LED -- a leading edge detected signal that indicates the bus grant signal leading edge has been detected;

BGS -- the bus grant signal received by the bus master controller and is the bus grant signal from the common system resource for the first bus master in the chain and the passed bus grant signal from 1he preceding bus master for the other bus masters in the chain;

BG* -- the bus grant signal synchronized with the local clock;

BGP -- the bus grant signal passed by the bus master controller;

CLK -- the local clock signal;

MRQ -- the signal from the bus master's bus control master indicating that access to the bus is required; and

POR -- a reset signal generated when the system is powered on to initialize the system circuits.

The logic operations are indicated as follows:

& -- the logical AND operator;

v -- the logical OR operator; and

' -- the logical NOT (invert) operator.

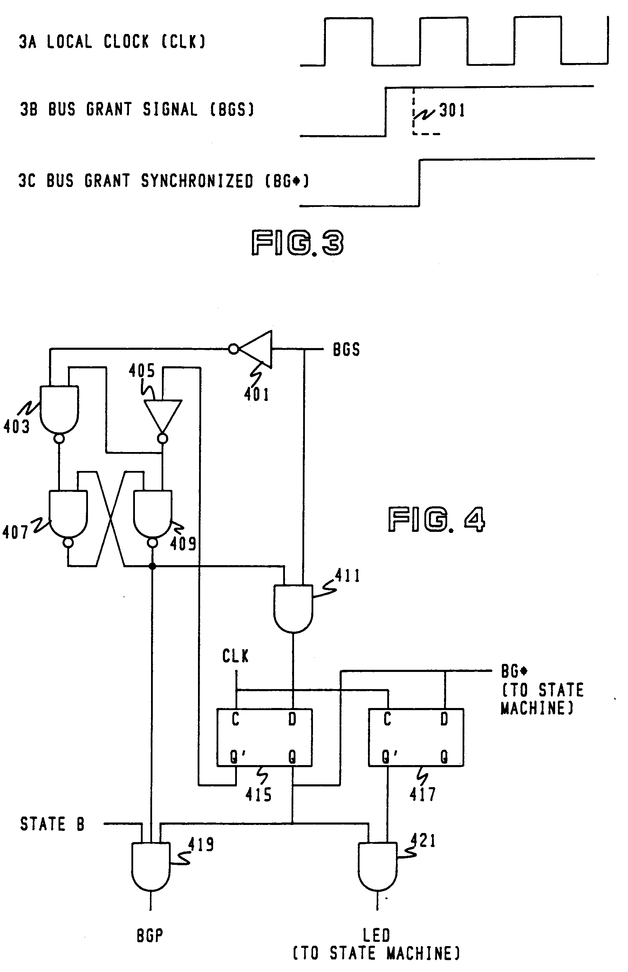

The LED and BG* signals are generated by the logic circuit of Figure 4 which is described in more detail below. The relation of the BG* signal to the BGS and CLK signals are shown in Figure 3. The bus grant signal, BGS, can occur any time as it is independent from the local clock signal, CLK. When the BGS signal is a logical '1' (shown as a high signal), the next CLK signal will generate the BG* signal. This is shown in more detail in connection with Figure 4 below. The dotted signal transition 301 illustrates one of the timing hazards that can occur in prior art systems. The bus grant signal can be narrowed in width as it propagates down the chain of bus masters until it occurs between adjacent local clock signals of a bus master and cannot be synchronized.

In Figure 2, the state machine is considered to be initially in the A-state, the idle or quiescent state. It is entered either by the POR signal generated in the system logic (not shown) or from the F-state which is the final state in the operation of the bus control master. The source of the F-state is not shown and is not necessary for an understanding of the invention. (See cross-related patent application.)

The B-state is the pass state and is the state that causes the BGS input signal to be passed as the BGP output signal to the next bus master in the chain if the bus master does not have an outstanding bus access request.

The C-state is the request state. It is entered to cause a bus request signal to be generated and, when the leading edge of the bus grant signal is detected, enables the associated bus control master by changing to the D-state. The states D - F are not further discussed but are used by the associated bus control master. The transition from the C-state to the D-state is the equivalent of supplying the CONTROL GRANTED signal from the bus master controller to its associated bus control master (Figure 1).

The machine remains in the A-state while the logic conditions LED' & (BG* v MRQ') is true. That is, the leading edge of the bus grant signal is not detected and either the bus grant synchronized signal (BG*) is active (true) or no request signal has been received from the associated bus control master (MRQ'), i.e., MRQ is inactive (false).

If a leading edge of the bus grant signal is detected (LED), the machine transits to the B-state. At this point, if the MRQ signal were made part of the logical conditions required to move to the B-state, then the particular bus master would hog the bus, i.e., no other bus master could assume control of the bus. The state machine remains in the B-state as long as the BG* signal is active (true), hereinafter referred to as a logical '1'.

From the B-state, the state machine transits to the A-state when the BG* is no longer true, a logical '0', if there is no request for access to the bus from the associated bus control master (MRQ'). If there is such a request, then the machine transits to the C-state. That is, the A-state is entered from the B-state if BG*' & MRQ' is true, i.e., both BG*r and MRQ' are both true. The C-state is entered from the B-state if BG*' & MRQ is true.

The C-state is entered from the A-state if the BG* signal and the LED signals are not true and the MRQ signal is true, i.e., LED' & BG*' & MRQ. Since BG*' & MRQ is the same as (BG* v MRQ')', the transit from the A-state to the C-state depends on the value of BG* v MRQ' changing.

In the C-state, a bus request signal is generated and the machine remains in the C-state until the leading edge of the bus grant signal is detected (LED).

The state machine of Figure 2 unambiguously primes the logic to pass the bus grant signal if no request is made or to intercept it if a bus grant request has been made. If more than one bus master requires access to the bus, they will enter the C-state. A bus master in the C-state which is not passed the bus grant signal by a preceding bus master in the chain will remain in its C-state, maintaining its bus request signal, until it does receive the bus grant. As will be seen below, the asynchronous logic of Figure 4 locks out the bus grant immediately upon the latter's deactivation so that a bus master further down the chain in the C-state does not erroneously detect a leading edge from the previous cycle.

The asynchronous logic of Figure 4 serves to lock out the BGP (PASS) signal as soon as the BGS (ACK) signal is terminated. This eliminates the timing hazards previously described. The operation of the circuit is now described in detail.

When the BGS signal is initially a logical '0', it is inverted to a logical '1' at the output terminal of an inverter 401. At the same time, the output Q' signal from a flip-flop 415 is a logical '1' since the flip-flop 415, as well as another flip-flop 417, is in the reset state. This logical '1' signal is inverted to a logical '0' at the output terminal of an inverter 405.

The input signals to a NAND gate 403 are a logical '1' from the inverter 401 and a logical '0' from the inverter 405. The output signal from the NAND gate 403 is therefore a logical '1'.

The logical '0' output signal from the inverter 405 causes the output signal of a NAND gate 409 to be a logical '1'. The logical '1' signals from the NAND gates 403 and 409 cause the output signal from a NAND gate 407 to be a logical '0'.

Since the Q output signal from the flip-flop 415 is a logical '0', the output signals from two AND gates 419 and 421 remain at a logical '0'.

This is the quiescent state of the logic until BGS signal is received. When BGS is a logical '1', an AND gate 411 produces an output signal of logical '1' because the BGS signal and the output signal from the NAND gate 409 are logical '1'. When the next local clock signal, CLK, occurs, the flip-flop 415 is set. In the meantime, the output signal from the inverter 401 is a logical '0' but the logical '0' signal from the inverter 405 keeps the output signal from the NAND gate 403 at logical '1' so the signal from the NAND gate 409 remains a logical '1'.

After the flip-flop 415 is set, its Q' output signal changes to a logical '0' which in turn causes the output signal from the inverter 405 to change to a logical '1'. The Q output signal from the flip-flop 415 becomes a logical '1' when the flip-flop is set and returns the BG* signal to the state machine of Figure 2.

Because the flip-flop 417 is still reset, its Q' output signal is a logical '1'. Combined with the logical '1' output signal from the flip-flop 415, the AND gate 421 produces the LED signal that is returned to the state machine of Figure 2. When the next CLK signal occurs, the flip-flop 417 will be set and the LED signal from the AND gate 421 will be inhibited. Therefore, the LED signal to the state machine of Figure 2 lasts for only a single cycle of the local clock.

If the state machine of Figure 2 is in the C-state, then the BGP signal is not produced and the bus master prepares to supply a request signal.

If the state machine of Figure 2 is in the B-state, i.e, the pass state, then all three input signals to the AND gate 419 are logical '1' and the BGP signal is passed to the next bus master as the latter's BGS input signal.

When the BGS signal is inactivated, i.e., becomes a logical '0', then the output signal from the inverter 401 becomes a logical '1'. Because the output signal from the inverter 405 is a logical '1' because the flip-flop 415 is set, the input signals to the NAND gate 403 are both logical '1' and the latter's output signal is a logical '0'. In turn, the logical '0' output signal from the NAND gate 403 causes the output signal from the NAND gate 407 to change to a logical '1'. This causes the output signal from the NAND gate 409 to change to a logical '0' because of the logical '1' output signal from the inverter 405.

When the output signal from the NAND gate 409 changes to a logical '0', the BGP signal is terminated at the output from the AND gate 419. Therefore, the BGP signal is terminated asynchronously when the BGS signal is inactivated.

At the next CLK signal, the flip-flop 415 will be reset because the logical '0' output signal from the NAND gate 409 also holds off the AND gate 411, putting a logical '0' signal on the D-input terminal of the flip-flop. The following CLK signal will reset the flip-flop 417 and the logic has returned to its quiescent state with the Q' output signal from the flip-flop 415 being a logical '1'..

The logic comprising the NAND gates 403, 407, and 409 and the inverter 405 acts as a trailing edge detection and lockout device to prevent the state machine from responding to a bus grant signal until the state machine has completed its normal operation, i.e., aligning the bus grant signal to the local clock and returning to the A-state. It inhibits the flip-flop 415 from detecting another bus grant signal until the logic has detected the deactivation of the previous bus grant signal. This insures that the trailing edge of the bus grant signal will always be detected and that deactivation of the BG* will take at least one cycle of the local clock. This eliminates the timing hazard due to sampling and shortening of the signal by successive bus masters in the chain.

The above description shows that the timing hazards inherent in the prior art daisy chain arbiters are avoided by the direct response to the deactivation of the bus grant signal passthrough by asynchronous lockout. In earlier systems, the trailing edge of the bus grant signal is synchronized to the local clock to prevent the timing hazards described earlier and such synchronization may take one or two local clock cycles. The asynchronous logic also prevents the bus master from responding to the next bus grant signal before the state machine has returned to the A-state. This logic frees the bus immediately for another cycle and therefore speeds up the process of accessing the common system resource.

The embodiment described also eliminates the daisy chain bus arbitration timing hazard that occurs when the time to propagate the deactivation of the bus grant signal through the daisy chain is greater than the bus master state machine cycle time. The bus master could incorrectly use the bus grant from a previous cycle as if it were the new cycle. The flip-flop 417 and the AND gate 421 prevent this error by acting as the leading edge detection circuit of the bus grant signal. The output signal from the AND gate 421 is used by the state machine of Figure 2 to indicate that a bus grant signal has been detected but can only be generated if the synchronizing flip-flop 415 is set and the flip-flop 417 is reset, indicating that the bus grant signal was inactive during the preceding cycle. This insures that only a new bus grant signal will be detected by the controller, thereby eliminating the timing hazard.

While the invention has been particularly shown and described with reference to a preferred embodiment thereof, it will be understood by those skilled in the art that various changes and modifications in form and details may be made therein without departing from the spirit and scope of the invention according to the following claims.

## Claims

1. Arbitration system for a daisy chain of resource masters, each resource master comprising, in combination:

    means for supplying a resource request signal;

    means for receiving a resource grant signal;

    means for controlling a resource if a resource request signal was supplied from the resource master;

    means for passing a resource grant signal if no resource request signal was supplied from the resource master; and

    means for inhibiting said passing means in immediate response to inactivation of the resource grant signal.

2. The system as claimed in claim 1 further comprising:

    clock means in each resource master for supplying local clock signals to the resource master; and

    gating means responsive to said local clock signals and to said resource grant signal for supplying a detected resource grant signal.

3. The system of claim 1 including clock means in each resource master for supplying local clock signals to the resource master, and

    means for detecting the leading edge of said resource grant signal with said local clock signal.

4. Arbitration system for a plurality of resource masters having means for supplying resource request signals coupled in parallel and means for receiving and means for selectively passing resource grant signals coupled seriatim, each resource master comprising, in combination:

    means for recognizing a resource grant signal;

    means for passing said resource grant signal in the absence of a request by the resource master;

    means responsive to said recognizing means for accessing said resource if a request by the resource master has been made; and

    means responsive to said receiving means for inhibiting said passing means as soon as said resource grant signal is no longer received.

5. The system claimed in claim 4 wherein said recognizing means further including

    clock means for supplying local clock signals in said resource masters; and

    means in said recognizing means for locking said resource grant signal to said local clock signals.

6. Arbitration system comprising:

    a plurality of device means for accessing a common system resource means, each device means including

    request means for supplying a signal to request access to the common system resource,

    receiving means for receiving a grant signal indicating that the common system resource means is available, and

    signal passing means for supplying a signal that the device means has received a grant signal but no request signal has been supplied by the device means;

    means for coupling the request means of each device means in parallel to generate a request signal to said common system resource;

    means for coupling said signal passing means to said re-ceiving means of successive devices seriatim so that the receiving means of one device means,a except a first device means, is coupled to the signal passing means of a preceding device means;

    means for coupling the receiving means of the first device means to receive a grant signal from said common system resource means indicating that said common system resource means is available;

    control means within each of said plurality of device means for causing said device means to access said common system resource means if said device means supplied a request signal and including

    means for supplying a signal from said signal passing

    means if said device means has not generated a request signal, and

    sequencing means for controlling said device means to prevent timing anomalies in the timing of said signal passing means.

7. The system claimed in claim 6 further including clock means for supplying local clock signal to said device means.

8. The system claimed in claim 7 wherein said sequencing means includes

    means for synchronizing a grant signal with said clock signal to supply a synchronized grant signal.

9. The system claimed in claim 8 further including in said sequencing means

    means responsive to deactivation of the grant signal for immediately disabling said signal passing means.

10. The system claimed in claim 9 including means for inhibiting said synchronizing means for at least one cycle of said local clock.

FIG. 1

FIG. 2

3A LOCAL CLOCK (CLK)

3B BUS GRANT SIGNAL (BGS)

3C BUS GRANT SYNCHRONIZED (BG◆)

## FIG.3

## FIG. 4

BGS

401

405

403

407    409

411

CLK

BG◆
(TO STATE
MACHINE)

C    D

Q'    Q

415

C    D

Q'    Q

417

STATE B

419

421

BGP

LED
(TO STATE MACHINE)